(19) Europäisches Patentamt
European Patent Office
Office européen des brevets

(11) **EP 3 729 796 B1**

(12) **FASCICULE DE BREVET EUROPEEN**

(45) Date de publication et mention de la délivrance du brevet:
**09.03.2022 Bulletin 2022/10**

(21) Numéro de dépôt: **18815765.5**

(22) Date de dépôt: **17.12.2018**

(51) Classification Internationale des Brevets (IPC):
**H04N 5/343** (2011.01)    **H04N 5/351** (2011.01)
**H04N 5/335** (2011.01)    G01J 1/44 (2006.01)
**H04N 5/33** (2006.01)

(52) Classification Coopérative des Brevets (CPC):
**G01J 1/4228; G01J 1/0228; H04N 5/343;**
**H04N 5/351;** G01J 2001/442; H04N 5/33

(86) Numéro de dépôt international:
**PCT/EP2018/085234**

(87) Numéro de publication internationale:
**WO 2019/121528 (27.06.2019 Gazette 2019/26)**

(54) **PROCEDE ET SYSTEME D'IMAGERIE A HAUT ET BAS NIVEAUX DE LUMIERE**

BILDGEBUNGSVERFAHRENS UND BILDGEBUNGSVORRICHTUNG GEEIGNET FÜR STARK UND SCWACH LICHT

IMAGING PROCESS AND IMAGING SYSTEM FOR HIGH AND LOW LIGHT LEVELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1701327**

(43) Date de publication de la demande:
**28.10.2020 Bulletin 2020/44**

(73) Titulaire: **THALES**
**92400 Courbevoie (FR)**

(72) Inventeurs:
• **BENNAI, Baya**
**78995 Elancourt (FR)**
• **MIDAVAINE, Thierry**
**78995 Elancourt (FR)**
• **NORMANDIN, Xavier**
**78995 Elancourt (FR)**
• **COURCOL, Yves**
**78995 Elancourt (FR)**
• **PERRUCHOT, Ludovic**
**78995 Elancourt (FR)**

(74) Mandataire: **Marks & Clerk France**
**Immeuble "Visium"**
**22, avenue Aristide Briand**
**94117 Arcueil Cedex (FR)**

(56) Documents cités:
EP-A1- 2 822 270     US-A1- 2004 094 720
US-A1- 2017 208 269

EP 3 729 796 B1

## Description

Le domaine de l'invention est celui de l'imagerie et plus particulièrement l'imagerie à bas niveau de lumière.

Dans le domaine visible, l'être humain est doté d'une capacité de vision de jour qui décroit pour des niveaux d'éclairement décroissant. En ambiance nocturne, les différentes conditions du ciel, principalement modulées par la phase de la Lune et la couverture nuageuse, permettent un éclairement au sol compris entre 1 lux et 0,1 mlux que l'on qualifie également par des niveaux de nuit (d'après la norme Aero 790 40) allant respectivement de nuit 1 (débutant à 1 lux) à nuit 5 (se terminant à 0,1 mlux). Le niveau de 0,1 mlux constitue un niveau d'éclairement ultime à atteindre et à améliorer pour la visionique. L'augmentation de la qualité image en nuit de niveau 5 constitue un avantage opérationnel. Or dans de faibles conditions d'éclairement, on ne reçoit que très peu de photons de la scène observée. Quand le flux reçu diminue, le rapport signal sur bruit (RSB) diminue jusqu'à devenir insuffisant pour la vision. Le signal est alors noyé dans le bruit généré par le détecteur et l'image issue du détecteur est inexploitable ou très dégradée. Ainsi, la sensibilité et le bruit du détecteur limitent les performances pour faire de l'imagerie à très bas niveau de lumière.

Généralement, les imageurs Bas Niveau de Lumière sont optimisés en augmentant la surface du pixel et en augmentant le temps d'intégration dans les limites du possible.

Actuellement, l'amélioration des performances de nuit peut aussi passer par l'utilisation de technologies à faible bruit de lecture et d'obscurité et par exemple en utilisant un milieu amplificateur introduisant des gains de multiplication sur le signal. On peut citer :

- ILCMOS : Tube intensificateur de lumière (tube IL) (avec galette de micro-canaux ou MCP Micro Channel Plate) couplé optiquement à une matrice CMOS ;
- EBCMOS : Photocathode + matrice CMOS (bombardée par les photoélectrons) intégrés dans un tube ;
- EMCCD : Matrice CCD avec un Multiplicateur d'Electron qui donne une amplification par avalanche sur le signal multiplexé ;
- Matrice de photodiodes APD (Avalanche Photo-Diode) soit en régime linéaire (gain multiplicateur) ou soit en régime compteur Geiger (déclenchement d'une impulsion de courant sur la génération d'un photoélectron).

Pour des applications scientifiques telles qu'en astronomie ou en imagerie bio-médicale, où l'on sait que l'on va recevoir très peu de photons de ce que l'on souhaite observer, on utilise la détection et l'imagerie à comptage de photons ; cette technique a été introduite il y a de nombreuses années tout d'abord avec l'emploi des photomultiplicateurs dans le traitement du signal temporel.

L'imagerie à comptage de photons repose sur le principe que le nombre de photons arrivant sur un détecteur à matrice de pixels, pendant un temps d'exposition donné est un processus stochastique. Il se caractérise par une loi de Poisson de moyenne $\mu_p$ et d'écart-type $\sqrt{\mu_p}$. En fonction du nombre moyen de photons par pixel $\mu_p$, on peut calculer la probabilité P que $n_p$ photons soient détectés pendant le temps d'exposition $t_{ex}$ (pris en compte par $\mu_p$). Cette loi est définie par la relation :

$$P_{\mu_p}(n_p) = e^{-\mu_p} \cdot \frac{\mu_p^{n_p}}{n_p!}$$

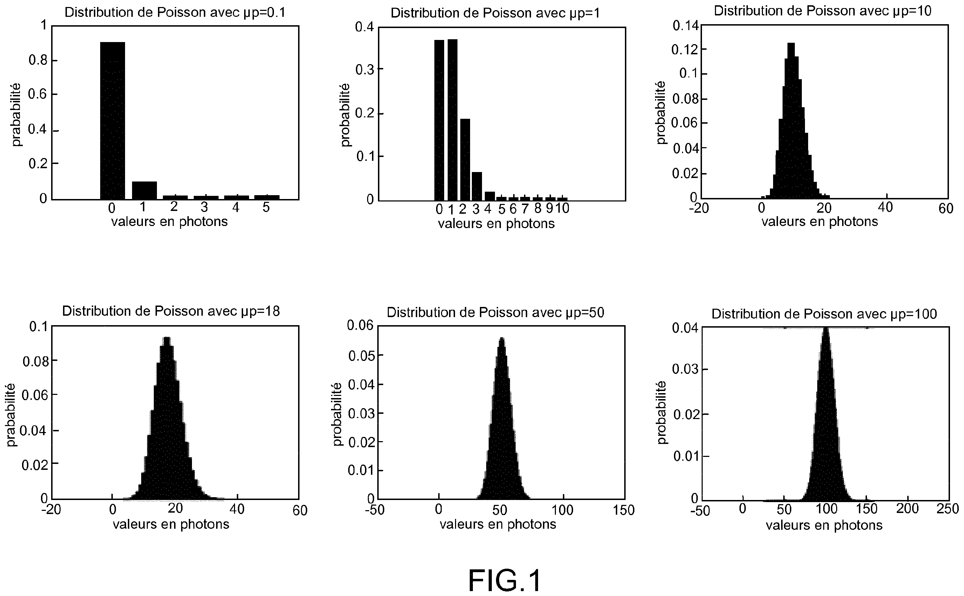

La Loi en figure 1 présente la distribution de Poisson pour différentes valeurs moyennes de photons par pixel. Ainsi, par exemple, en exploitant la loi de Poisson, pour un flux moyen de 0,15 photon par pixel, on a 86 % des pixels qui ne voient aucun photon, 13% qui en voient un et 1% voient plus que 1 photon. Ainsi, si on se place dans ce régime particulier de la loi de Poisson avec en moyenne 0,15 photon par pixel (ou moins), alors on peut contraindre une exploitation statistique du signal reçu en sachant a priori que soit on ne reçoit pas de photon (0 photon) soit on en reçoit seulement 1 dans 99% des cas par période du temps d'exposition. On peut donc estimer le signal de manière binaire en ne se trompant que dans moins de 1% des cas pour cet exemple du flux moyen inférieur ou égal à 0,15 photon par pixel. Pour des flux moyens plus élevés nous allons avoir un taux d'erreur de plus en plus important avec une confusion des situations où le pixel compte un photon alors qu'il en a collecté 2 ou plus. Le raisonnement que nous venons d'avoir sur la réception de photons par un pixel s'applique aussi sur les photoélectrons générés par le processus de détection photoélectrique mis en oeuvre dans le détecteur.

Le signal analogique en sortie du détecteur est fluctuant et est dominé par le bruit de lecture et le bruit d'obscurité pour un pixel qui n'a pas généré de photoélectron, et le bruit de multiplication pour les pixels ayant converti 1 ou plusieurs photoélectrons. Cependant, la connaissance a priori du nombre de photons reçus, inférieur à 0,15 en moyenne, nous contraint en sortie à deux états : soit on a reçu 0 photon soit on en a reçu 1, dans 99% des cas. On peut donc remplacer le signal analogique fluctuant en binarisant une trame élémentaire ou une acquisition élémentaire du pixel en 0 ou 1. Cela peut être fait par exemple par un algorithme de seuillage : en dessous d'un certain seuil, on considère que l'on a reçu 0 photon, la fluctuation analogique du signal initial étant dominée par les différents bruits du détecteur et non par la véritable amplitude liée à l'incidence de 0 photon. Au-delà du seuil, on considère que la détection de 1 et d'un seul photon a bien eu lieu et cette amplitude « unité » remplace l'amplitude analogique liée à la fluctuation du bruit de lecture et de multiplication du signal. La binarisation de la trame par cette méthode conduit toutefois à un bruit résiduel lié à l'erreur de taux de comptage de photons. Ce bruit résiduel peut être caractérisé par une probabilité d'erreur de comptage qui peut être estimée et bornée toujours en utilisant les statistiques de bruit et de la loi de Poisson. Cette probabilité se décompose en probabilité de compter 1 pour 0 photon incident, probabilité de compter 0 pour 1 photon incident et encore probabilité de compter 1 pour 2 photons ou plus incidents.

Enfin, la dernière étape de l'imagerie à comptage de photons consiste à sommer plusieurs trames élémentaires binaires pour reconstituer une image correspondant à la cadence de restitution des images en sortie, par exemple pour une cadence de sortie vidéo de 25 Hz, soit 40 ms de temps d'accumulation des trames élémentaires obtenues à plus haute cadence. La somme des différentes trames binarisées permet de reconstituer une image avec différents niveaux de gris. Le nombre de nuances de gris discernables n'est plus dominé par la dispersion des gains de multiplication du procédé d'amplification du signal qui est à l'origine de la sensation d'une neige qui domine l'image et ses nuances.

Il est important de noter que si le flux de scène augmente au-dessus de 0,15 photons moyens par trame élémentaire, alors on sort de ce régime contraint de 0 ou 1 photon pour avoir de plus en plus de cas où le pixel voit 2 photons ou plus. Or dans ce cas-là le facteur du bruit d'amplification du détecteur ne permet plus d'estimer le nombre exact de photons reçus avec un bon taux de confiance. Autrement dit, on n'est pas capable de savoir si l'on a reçu 1, 2, 3 photons ou plus. On perd en information. Ceci est une limite importante de l'imagerie à comptage de photons avec les détecteurs actuels à multiplication de charges.

Il est important de noter que ce facteur de bruit d'amplification est différent pour les différents types de détecteurs. Dans les technologies SPAD (Single Photon Avalanche Diode) ou photodiode à avalanche en mode Geiger, l'absorption d'un photon provoque un processus d'avalanche géant. Le courant généré par l'avalanche est détecté par un circuit électronique qui permet la détection du photon. Cependant, après un tel processus, un temps mort est nécessaire pour évacuer les charges et donc empêche la détection d'un nouveau photon pendant ce temps d'évacuation. Ce n'est pas ce type de technologie qui est préféré et présenté ici.

Pour certaines applications en astronomie (en utilisant par exemple une caméra de la société Nüvü ou de la société First Light Imaging) ou en imagerie biomédicale, l'imagerie à comptage de photons est bien indiquée car l'on sait que l'on ne recevra que peu de photons. En revanche pour des applications de vision d'une scène nocturne quelconque, on ne sait pas par avance quelles conditions d'éclairement on va pouvoir rencontrer et quelle dynamique de scène sera rencontrée dans l'image vidéo (spatialement et temporellement). Si le flux de scène est fort alors que l'on fait de l'imagerie à comptage de photons, on est hors de la zone du régime d'éclairement qui permet de binariser le signal de chaque pixel dans la trame ; on perd donc en information mais toutefois dans ce régime l'imagerie classique peut être suffisante en qualité du fait que le bruit du récepteur est inférieur à $\sqrt{n_p}$ (écart type pour un niveau moyen de $n_p$ (par exemple $n_p > 10$ photons par trames). En revanche, si le flux de scène est trop faible alors que l'on fait de l'imagerie classique, les bruits du détecteur seront alors prépondérants et l'image inexploitable.

En conséquence, il demeure à ce jour un besoin pour un procédé et un système d'imagerie à grande dynamique, adapté à des conditions d'éclairement imprévues et pouvant varier d'un flux de scène fort à un flux de scène faible.

Le système d'imagerie selon l'invention comprend plusieurs modes d'imagerie, avec au moins :

- Un mode d'imagerie classique utilisé quand le flux de scène est important. Ce mode et les conditions d'applications de ce mode supposent un flux photonique important, supérieur au carré du bruit de lecture du détecteur et à son courant d'obscurité. Auquel cas le détecteur générera une image limitée par le bruit photonique. Si le détecteur le permet (comme dans les EMCCD) l'emploi d'un mode d'amplification ou de multiplication du signal n'est pas nécessaire et dans ce cas le S/B est typiquement proche de la racine du flux photonique accumulé par pixel et par trame. Si le flux photonique diminue et devient proche du courant d'obscurité ou du carré du bruit de lecture alors on peut enclencher un processus d'amplification ou de multiplication sur le signal pour limiter la dégradation du rapport signal sur bruit.

- Un mode d'imagerie à comptage de photons « naturel », permettant de faire de l'imagerie à très bas niveaux de lumière. A très faible flux les détecteurs sont limités par le bruit de lecture du récepteur. Auquel cas il est pertinent d'utiliser un dispositif d'amplification ou de multiplication des photoélectrons. De ce fait dans certains détecteurs le signal photo-électrique multiplié devient dominant par rapport au bruit de lecture de la matrice ou encore au courant d'obscurité. Par contre le facteur de multiplication est stochastique et apporte un bruit dit facteur de bruit d'amplification qui va dégrader le S/B. On a montré que si ce flux est inférieur à 0,15 photo électron par pixel et par trame alors une logique de seuillage permet de contraindre à 0 ou à 1 le signal analogique délivré par chaque pixel. On est dans ce cas en mode d'imagerie à comptage de photon que nous définissons comme « naturel ». Ce mode permet d'améliorer la qualité image qui peut se définir par son S/B et une dynamique de niveaux de gris restitués plus importante.

Et quand le flux de scène est intermédiaire, c'est-à-dire diminue sans atteindre un seuil de très bas niveau de lumière adapté au comptage de photons « naturel », alors on peut forcer le système d'imagerie à basculer dans un mode spécifique d'imagerie à comptage de photons « forcé », en se plaçant dans des conditions permettant d'être dans ce régime contraint à 0 ou 1 photon par pixel pour une trame. Dans ce cas il est pertinent d'examiner si d'une part il est judicieux d'enclencher la fonction d'amplification ou de multiplication du signal pour réduire l'influence du bruit de lecture et le courant d'obscurité du capteur que nous avons vus dans le mode d'imagerie classique. Nous sommes alors dans le mode d'imagerie classique multiplié ou amplifié. Néanmoins dans ce mode de multiplication nous allons voir une dégradation du S/B et de la dynamique de l'image en descendant dans les niveaux d'éclairement. Il est alors possible ensuite, paradoxalement, de réduire le flux photonique par pixel et par trame pour entrer dans un mode similaire au comptage de photon naturel pour améliorer la qualité image par son S/B et sa dynamique par rapport au mode multiplié. Ceci définit le mode imagerie à comptage de photon forcé.

On peut considérer en première approche que :

- lorsque le flux de scène est inférieur à 0,15 photo électron par pixel et par trame, le mode d'imagerie est à comptage de photons naturel,
- lorsque le flux de scène est supérieur à quelques (par exemple 5) photo électron par pixel et par trame, le mode d'imagerie est classique,
- lorsque le flux de scène est intermédiaire, le mode d'imagerie est à comptage de photons forcé.

On contraint le système à se placer dans un mode d'imagerie en pilotant certains paramètres tels que :

 ▪ le temps d'intégration pour avoir, par exemple, en moyenne 0.15 photon/pixel/trame ou moins, si l'on choisit le mode d'imagerie à comptage de photon. Cette valeur 0.15 peut être ajustable et dépend de l'algorithme de binarisation choisi ; on peut avoir par exemple 0.2 photon/pixel/trame en tolérant par exemple une erreur de comptage un peu plus importante,
 ▪ la cadence d'acquisition,
 ▪ l'ouverture numérique de l'optique,
 ▪ l'atténuation optique,
 ▪ la bande spectrale de réception pour par exemple améliorer la discrimination spectrale,
 ▪ le pas pixel ou son facteur de remplissage si la technologie le permet pour par exemple améliorer la résolution angulaire ou la FTM,
 ▪ etc...

Plus précisément l'invention a pour objet un procédé d'imagerie d'une scène au moyen d'un système d'imagerie permettant d'obtenir une image de la scène, le système d'imagerie comportant un dispositif d'acquisition de trames selon des paramètres d'acquisition, et une unité de traitement des trames acquises, caractérisé en ce que le procédé comprend les étapes suivantes :

 A) Choix d'un mode d'imagerie parmi un mode d'imagerie classique, un mode d'imagerie à comptage de photons naturel et un mode d'imagerie à comptage de photons forcé, et en fonction du mode d'imagerie choisi, détermination par l'unité de traitement, des paramètres d'acquisition correspondant,
 B) acquisition d'au moins une trame par le dispositif d'acquisition paramétré avec lesdits paramètres d'acquisition, et transmission des trames acquises à l'unité de traitement pour obtenir une image, l'image étant obtenue à l'issue des sous-étapes suivantes si le mode d'imagerie choisi est le mode d'imagerie à comptage de photons naturel ou le mode d'imagerie à comptage de photons forcé :

 - binarisation des trames acquises et
 - somme des trames binarisées pour obtenir une image,

 C) estimation de la qualité de l'image obtenue,
 D) D1) en fonction de la qualité de l'image obtenue, déterminer un ou deux nouveau(x) mode(s) d'imagerie choisi(s) parmi le mode d'imagerie classique, le mode d'imagerie à comptage de photons naturel et le mode d'imagerie à comptage de photons forcé,
 D2) réitérer les étapes A, B, C et D avec le nouveau mode d'imagerie choisi comme mode d'imagerie.

Selon un mode de réalisation de l'invention, l'étape D1) est réalisée par comparaison (1ère comparaison) de la qualité de l'image obtenue à une première qualité prédéterminée correspondant au mode d'imagerie classique :

- si la comparaison (1ère comparaison) est favorable, réitération des étapes A, B, C et D avec le mode d'imagerie classique comme mode d'imagerie choisi,
- sinon comparaison (2è comparaison) de la qualité de l'image obtenue à une seconde qualité prédéterminée correspondant au mode d'imagerie à comptage de photons naturel, et

 o si la comparaison (2è comparaison) est favorable, réitération des étapes A, B, C et D avec le mode d'imagerie à comptage de photons naturel comme mode d'imagerie choisi,
 o sinon réitération des étapes A, B, C et D avec le mode d'imagerie à comptage de photons forcé comme mode d'imagerie choisi.

Comme rappelé en préambule, sans mode à comptage de photon les imageurs Bas Niveau de Lumière sont optimisés, pour les très faibles flux, en augmentant la surface du pixel et en augmentant le temps d'intégration dans les limites du possible. Selon l'invention, l'introduction du mode à comptage de photon (naturel et forcé) permet de privilégier la réduction de la taille des pixels et/ou de réduire le temps d'intégration en augmentant la cadence trame pour exploiter ce mode dans une plus grande dynamique de scène.

Les paramètres du dispositif d'acquisition sont typiquement des paramètres de temps de cadence et/ou de temps d'intégration et/ou d'ouverture de l'optique et/ou de variation de bande spectrale et/ou de variation d'atténuation optique.

Les paramètres d'acquisition selon le mode d'imagerie classique et les paramètres selon le mode d'imagerie à comptage de photons naturel ont typiquement des valeurs fixes, et les paramètres selon le mode d'imagerie à comptage de photons forcé ont typiquement des valeurs variant d'une itération à l'autre pour optimiser le critère de qualité image à chaque itération.

Selon une caractéristique de l'invention, le procédé comporte une étape de division spatiale de chaque trame en sous-trames et les étapes des modes d'imagerie sont appliquées à chaque sous-trame.

L'estimation de la qualité de l'image obtenue peut être déterminée par calcul ou par un opérateur.

En outre un tel procédé peut avantageusement être utilisé en imagerie active, c'est-à-dire avec une illumination laser. Dans ce cas les paramètres du dispositif d'acquisition peuvent avantageusement conduire à réduire l'éclairement laser de la scène ou encore à augmenter sa portée.

Ainsi selon une autre caractéristique de l'invention, le procédé comporte une étape préalable d'illumination de la scène au moyen d'un dispositif d'illumination synchronisé avec le dispositif d'acquisition et le dispositif d'illumination et le dispositif d'acquisition présentent la même bande spectrale. Dans ce cas, des paramètres d'illumination peuvent aussi être définis à l'étape A.

Les paramètres d'illumination sont par exemple des paramètres de puissance et/ou de durée d'illumination du dispositif d'illumination.

L'invention a aussi pour objet un système d'imagerie d'une scène qui comprend un dispositif d'acquisition de trames de la scène, éventuellement un dispositif d'illumination de la scène, et une unité de traitement reliée au dispositif d'acquisition et à l'éventuel dispositif d'illumination, configurés pour mettre en oeuvre le procédé d'imagerie tel que décrit.

Ainsi, au lieu de subir le flux de scène reçu, le système d'imagerie selon l'invention adapte ses paramètres de fonctionnement, comme par exemple sa cadence d'acquisition, pour être dans le mode d'imagerie présentant les meilleures performances.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement des exemples de distributions de Poisson, en l'occurrence des histogrammes des flux photoniques acquis sur une matrice, pour différentes valeurs de moyenne $\mu_p$,
la figure 2a représente schématiquement un premier exemple de système d'imagerie selon l'invention, la figure 2b représente schématiquement un deuxième exemple de système d'imagerie selon l'invention, avec un système d'imagerie active,
la figure 3 est un exemple d'organigramme montrant différentes étapes du procédé selon l'invention.

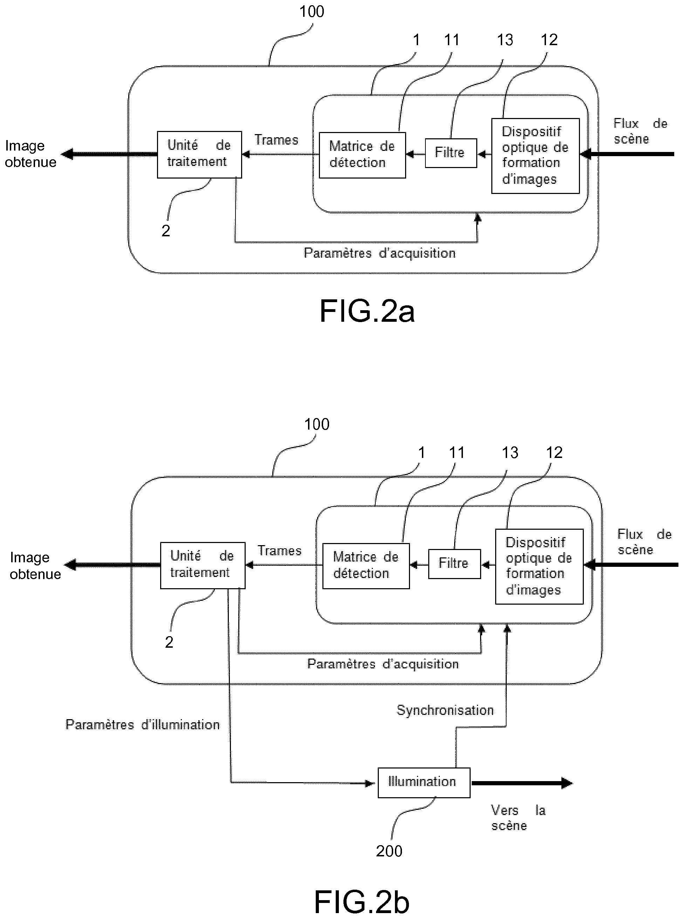

On décrit, en relation avec la figure 2a un exemple de système d'imagerie 100 selon l'invention. Il comprend :

■ un dispositif 1 d'acquisition de trames de la scène comportant :

o un dispositif 12 optique de formation d'images sur un plan focal et
o dans le plan focal, une matrice 11 de détection qui génère l'acquisition de trames, et

■ une unité de traitement 2 reliée au dispositif d'acquisition 1.

Le système d'imagerie peut fonctionner selon plusieurs modes d'imagerie, avec au moins :

- Un mode d'imagerie classique utilisé quand le flux de scène est important,
- Un mode d'imagerie à comptage de photons dit naturel, permettant de faire de l'imagerie à très bas niveau de lumière, c'est-à-dire quand le flux de scène est faible,
- Un mode d'imagerie à comptage de photons dit forcé, permettant de faire de l'imagerie quand le flux de scène est intermédiaire entre important et faible.

Ainsi, quand le flux de scène est important, on conserve une imagerie classique. Quand le flux de scène est faible, on bascule en imagerie à comptage de photons naturel. En revanche, quand le flux de scène est intermédiaire, alors on force le système d'imagerie à basculer dans un mode spécifique d'imagerie à comptage de photons forcé, en plaçant le système d'imagerie dans des conditions permettant d'être dans ce régime contraint à 0 ou 1 photon par pixel pour une trame : on contraint le système d'imagerie en jouant sur un ou plusieurs de ses différents paramètres (temps d'intégration, cadence, ouverture, illumination pour de l'imagerie active...) pour pouvoir être dans le mode particulier où l'on peut faire avantageusement du point de vue de la qualité image restituée, du comptage de photons.

On contraint le système d'imagerie à se placer dans l'un ou l'autre mode d'imagerie en pilotant les paramètres du dispositif d'acquisition tels que :

- la cadence d'acquisition de la matrice de détection 11, ou la période d'acquisition,
- le temps d'intégration de la matrice de détection 11,
- l'ouverture du dispositif de formation d'images 12,
- l'atténuation optique ou la variation de bande spectrale en choisissant un filtre 13 parmi des filtres de différentes atténuations ou différentes largeurs de bandes spectrales respectivement.

On peut par exemple d'une manière préférée :

- Ajuster la cadence d'acquisition des trames.
- Piloter le temps d'intégration pour avoir en moyenne 0.15 photon/pixel/trame ou moins, si l'on choisit le mode d'imagerie à comptage de photons. Cette valeur 0.15 dépend de la fonction de binarisation choisie et du taux d'erreur admis sur l'image restituée.

On peut également jouer sur d'autres paramètres (exemple : ouverture, atténuation optique variable, illumination de la scène en imagerie active...) pour limiter artificiellement le flux issu de la scène et ainsi contraindre le système à se trouver dans le mode d'imagerie à comptage de photons. Ces paramètres sont pilotés par l'unité de traitement 2.

Ainsi, au lieu de subir le flux de scène reçu, le système d'imagerie selon l'invention adapte ses paramètres de fonctionnement, comme par exemple sa cadence d'acquisition, pour être dans le mode d'imagerie présentant les meilleures performances.

Le basculement entre les différents modes d'imagerie se fait en fonction du flux de scène reçu ou plus précisément en fonction de la qualité de l'image obtenue selon l'un ou l'autre mode d'imagerie, cette qualité étant liée au flux de scène reçu. Il peut se faire de manière automatique en étant assuré par l'unité de traitement 2 ou bien manuellement. Il peut se faire sur l'ensemble de la matrice de détection 11 (→ sur chaque trame acquise) ou seulement sur une partie (→sous-trame ou fenêtre), voire si la matrice le permet, par pixel, ce qui permet d'adapter au plus fin le mode d'imagerie au flux reçu.

Si le flux de scène est relativement faible alors le système d'imagerie adapte ses paramètres pour rester dans un mode d'imagerie à comptage de photons.

Si le flux de scène est trop important et que l'on ne peut plus contraindre le système à être dans le régime spécifique du mode comptage de photons ou si les performances sont meilleures en imagerie classique alors on rebascule dans un mode d'imagerie classique où on accumule les photons pendant un temps d'intégration égal à celui de l'image finale (40 ms dans le cas d'une vidéo à 25 Hz par exemple).

En imagerie à bas niveau de lumière, pour augmenter la sensibilité ou la qualité d'image, il est classique d'augmenter le temps d'intégration par trame et/ou d'augmenter la surface du pixel et/ou d'augmenter la bande spectrale de réception. Selon l'invention, pour exploiter le mode à comptage de photons, les paramètres du dispositif d'acquisition sont pilotés en privilégiant l'augmentation de la cadence trame et ainsi la réduction du temps d'intégration, la limitation ou même la réduction de la bande spectrale.

Le procédé selon l'invention permet aussi d'utiliser une matrice de détecteurs dont la taille des pixels est réduite, quitte à utiliser des modes de binning (comme dans les CCD) qui permettent de sommer les charges sur des pixels adjacents (2x2, 3x3 ou 4x4) par exemple pour effectivement augmenter la taille des pixels.

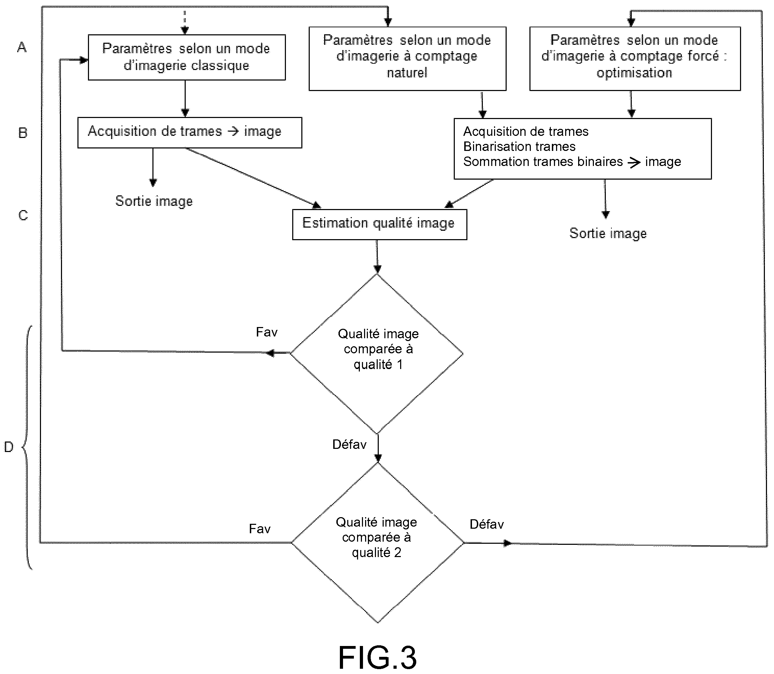

On va décrire en relation avec la figure 3, des étapes d'un exemple de procédé d'imagerie selon l'invention.

A) Détermination par l'unité de traitement 2, des paramètres d'acquisition du dispositif d'acquisition 1 selon un mode d'imagerie choisi. Les paramètres du mode d'imagerie classique et ceux du mode d'imagerie à comptage naturel sont prédéterminés et ont des valeurs prédéterminées. Celles des paramètres du mode d'imagerie à comptage naturel correspondent aux conditions d'utilisation ultimes du dispositif d'acquisition, correspondant par exemple à 0.15 photon/pixel ou moins pour chaque trame.

Les paramètres du mode d'imagerie à comptage forcé sont variables : les paramètres peuvent varier d'une image à l'autre et leurs valeurs sont optimisées d'une image à l'autre pour optimiser le critère de qualité image d'une image à l'autre. Elles sont généralement optimisées par l'unité de traitement dans une fourchette de valeurs, en procédant par pas d'une itération à l'autre. Ces fourchettes de valeurs se situent entre les valeurs des paramètres en mode classique et celles des paramètres en mode à comptage naturel.

B) Acquisition d'au moins une trame par le dispositif d'acquisition paramétré selon le mode d'imagerie en cours et transmission de ces trames à l'unité de traitement au fur et à mesure de leur acquisition.

Si le mode d'imagerie en cours (choisi à l'étape A) est le mode classique, une image est obtenue à partir de ces trames par l'unité de traitement de manière classique (acquisition d'au moins une trame et sommation des trames pour obtenir l'image finale).

Si le mode d'imagerie en cours (choisi à l'étape A) est le mode d'imagerie à comptage naturel ou à comptage forcé, les sous-étapes suivantes sont effectuées par l'unité de traitement :

- Binarisation des trames acquises,
- Somme des trames binarisées pour former une image.

Pour la binarisation des trames acquises, on peut utiliser une fonction de binarisation à seuil (on attribue 1 à un pixel lorsque l'amplitude mesurée sur ce pixel est supérieur à un seuil prédéterminé, 0 sinon), mais d'autres fonctions de binarisation peuvent être envisagées telles que décrites dans les publications suivantes :

■ - E. Lantz et al « Multi-imaging and Bayesian estimation for photon counting with EMCCDs » Mon. Not. R. Astron. Soc, 386, 2262-2270 (2008)

■ - K.B.W. Harpsoe et al « Bayesian photon counting with EMCCDs », A&A, 537 (2012).

En sortie de l'unité de traitement, l'image obtenue selon l'un ou l'autre mode est envoyée par exemple vers un dispositif d'affichage.

C) Estimation par l'unité de traitement 2 de la qualité de l'image obtenue.

D) Comparaison (1ère comparaison) à une première qualité d'image prédéterminée (qualité1) correspondant à une qualité d'image en mode classique, par l'unité de traitement. Si la comparaison (1ère comparaison) est favorable au mode d'imagerie classique (la qualité de l'image obtenue est par exemple donnée par le niveau d'éclairement de la scène mesuré dans le domaine spectral Visible compris entre 100 000 lux et 0,01 lux, ou moins suivant la configuration optique et les performances du détecteur), on réitère les étapes A, B, C et D en choisissant le mode d'imagerie classique (qui peut être le mode en cours). Ce critère de niveau d'éclairement peut être réalisé aussi en entrée pupille ou encore sur le plan focal, il peut être mesuré en $W/m^2$ ou encore en $photons/s/m^2$ dans le domaine spectral des filtres 13, par exemple dans le proche IR ou encore dans le SWIR. Si la comparaison (1ère comparaison) est défavorable au mode d'imagerie classique, on compare (2è comparaison) la qualité de l'image obtenue à une seconde qualité d'image prédéterminée (qualité2), correspondant à une qualité d'image en mode à comptage naturel, au moyen de l'unité de traitement. Si la comparaison (2è comparaison) est favorable au mode à comptage naturel (la qualité de l'image obtenue est par exemple comprise entre des éclairements de 1mlux et 1 $\mu$lux), on réitère les étapes A, B, C et D en choisissant le mode à comptage naturel (qui peut être le mode en cours) sinon (= la comparaison (2è comparaison) est donc favorable au mode à comptage forcé avec une qualité de l'image obtenue par exemple pour des éclairements compris entre 1 mlux et 10 mlux)) on réitère les étapes A, B, C et D en mode à comptage forcé (qui peut être le mode en cours) avec donc une optimisation des paramètres d'acquisition en étape A. Lorsque la qualité 1 et/ou éventuellement la qualité 2 ne sont pas prédéterminées, on peut acquérir de nouvelles trames selon deux modes d'imagerie (classique et à comptage forcé, ou à comptage forcé et à comptage naturel) et on choisit entre les deux, le mode d'imagerie qui donne le meilleur critère de qualité. Cela revient à définir ces critères de qualité de manière relative.

On a donné comme exemple de critère de qualité un niveau d'éclairement incident sur la scène ou encore en entrée pupille ou encore dans le plan focal; on peut bien sûr prendre d'autres critères connus de l'homme du métier tels que le rapport signal à bruit (temporel ou spatial), la dynamique en niveaux de gris restitués.

Le mode d'imagerie initial peut être l'un ou l'autre mode. Ce mode initial est enclenché sans connaître le niveau d'éclairement du flux de scène reçu. Dans l'exemple de la figure 3, on a choisi le mode classique comme mode initial symbolisé par une flèche en pointillé. Mais si l'on choisit un mode d'imagerie par comptage par photon (naturel ou forcé), les tests de comparaison aux qualités 1 et 2 sont bien sûr inversés pour conserver les paramètres d'acquisition tant qu'il n'est pas nécessaire de les changer.

Dit autrement, le procédé comporte les étapes suivantes.

A) Choix d'un mode d'imagerie parmi un mode d'imagerie classique, un mode d'imagerie à comptage de photons naturel et un mode d'imagerie à comptage de photons forcé, et détermination par l'unité de traitement 2, des paramètres d'acquisition du dispositif d'acquisition 1 selon un mode d'imagerie choisi. Les paramètres du mode d'imagerie classique et ceux du mode d'imagerie à comptage naturel sont prédéterminés et ont des valeurs prédéterminées. Celles des paramètres du mode d'imagerie à comptage naturel correspondent aux conditions d'utilisation ultimes du dispositif d'acquisition, correspondant par exemple à 0.15 photon/pixel ou moins pour chaque trame.

Les paramètres du mode d'imagerie à comptage forcé sont variables : les paramètres peuvent varier d'une image à l'autre et leurs valeurs sont optimisées d'une image à l'autre pour optimiser le critère de qualité image d'une image à l'autre. Elles sont généralement optimisées par l'unité de traitement dans une fourchette de valeurs, en procédant par pas d'une itération à l'autre. Ces fourchettes de valeurs se situent entre les valeurs des paramètres en mode classique et celles des paramètres en mode à comptage naturel.

B) Acquisition d'au moins une trame par le dispositif d'acquisition paramétré selon le mode d'imagerie en cours et transmission de ces trames à l'unité de traitement au fur et à mesure de leur acquisition.

Si le mode d'imagerie en cours (choisi à l'étape A) est le mode classique, une image est obtenue à partir de ces trames par l'unité de traitement de manière classique (acquisition d'au moins une trame et sommation des trames pour obtenir l'image finale).

Si le mode d'imagerie en cours (choisi à l'étape A) est le mode d'imagerie à comptage naturel ou à comptage forcé, les sous-étapes suivantes sont effectuées par l'unité de traitement :

- Binarisation des trames acquises,
- Somme des trames binarisées pour former une image.

En sortie de l'unité de traitement, l'image obtenue selon l'un ou l'autre mode est envoyée par exemple vers un dispositif d'affichage.

C) Estimation par l'unité de traitement 2 de la qualité de l'image obtenue.

D) D1) en fonction de la qualité de l'image obtenue, déterminer un (ou deux comme indiqué précédemment) nouveau mode d'imagerie choisi parmi le mode d'imagerie classique, le mode d'imagerie à comptage de photons naturel et le mode d'imagerie à comptage de photons forcé.
D2) réitérer les étapes A, B, C et D avec le (ou chaque) nouveau mode d'imagerie choisi comme mode d'imagerie.

Selon une variante, préalablement aux étapes d'obtention d'images, les trames acquises sont spatialement divisées en sous-trames ou fenêtres, cette division spatiale pouvant aller jusqu'à considérer dans chaque trame une fraction des pixels (fenêtre, lignes, colonnes ou encore pixels déterminés). Les étapes des différents modes d'imagerie sont alors appliquées à chaque sous-trame.

Ce procédé d'imagerie est en particulier bien adapté à l'imagerie active qui comporte alors une étape préalable d'illumination de la scène par un dispositif d'illumination (laser, LED, lampe) 200 montré figure 2b généralement synchronisé avec le dispositif d'acquisition 1. On va alors restreindre la bande spectrale du dispositif d'acquisition à celle du dispositif d'illumination et ainsi ne compter que les photons de la scène réfléchis dans cette bande. On peut aussi réduire la puissance ou les durées d'illumination du dispositif d'illumination. La bande spectrale, la puissance ou les durées d'illumination sont alors des paramètres d'illumination aussi pilotés par l'unité de traitement 2.

**Revendications**

**1.** Procédé d'imagerie d'une scène au moyen d'un système d'imagerie (100) permettant d'obtenir une image de la scène, le système d'imagerie comportant un dispositif (1) d'acquisition de trames selon des paramètres d'acquisition, ledit dispositif comprenant un détecteur comprenant des pixels, et une unité (2) de traitement des trames acquises, **caractérisé en ce que** le procédé comprend les étapes suivantes :

A) Choix d'un mode d'imagerie parmi un mode d'imagerie classique, un mode d'imagerie à comptage de photons naturel et un mode d'imagerie à comptage de photons forcé,

le mode d'imagerie classique étant adapté lorsqu'un flux photonique par pixel et par trame est important, et dans lequel on procède à l'acquisition d'au moins une trame puis à la sommation desdites trames pour obtenir une image,
le mode d'imagerie à comptage de photons naturel étant adapté lorsque ledit flux photonique par pixel et par trame est de très bas niveau,

le mode d'imagerie à comptage de photons forcé correspondant à un flux photonique par pixel et par trame intermédiaire entre celui correspondant au mode d'imagerie classique et celui correspondant au mode d'imagerie à comptage de photons naturels, et dans lequel on réduit le flux photonique par pixel et par trame de manière à obtenir un niveau correspondant au mode d'imagerie à comptage de photons naturel,
et, en fonction du mode d'imagerie choisi, détermination par l'unité de traitement, des paramètres d'acquisition correspondant,

B) acquisition d'au moins une trame par le dispositif d'acquisition paramétré avec lesdits paramètres d'acquisition, et transmission des trames acquises à l'unité de traitement pour obtenir une image, l'image étant obtenue à l'issue des sous-étapes suivantes si le mode d'imagerie choisi est le mode d'imagerie à comptage de photons naturel ou le mode d'imagerie à comptage de photons forcé :

- binarisation des trames acquises et
- somme des trames binarisées pour obtenir une image,

C) estimation de la qualité de l'image obtenue,
D) D1) en fonction de la qualité de l'image obtenue, déterminer un ou deux nouveau(x) mode(s) d'imagerie choisi(s) parmi le mode d'imagerie classique, le mode d'imagerie à comptage de photons naturel ou le mode d'imagerie à comptage de photons forcé,
D2) réitérer les étapes A, B, C et D avec le nouveau mode d'imagerie choisi comme mode d'imagerie.

**2.** Procédé d'imagerie d'une scène selon la revendication précédente, **caractérisé en ce que** le nouveau mode d'imagerie choisi de l'étape D1) est obtenu par comparaison (1ère comparaison) de la qualité de l'image obtenue à une première qualité prédéterminée (qualité1) correspondant au mode d'imagerie classique :

- si la comparaison (1ère comparaison) est favorable, le nouveau mode d'imagerie choisi est le mode d'imagerie classique,
- sinon comparaison (2è comparaison) de la qualité de l'image obtenue à une seconde qualité prédéterminée (qualité2) correspondant au mode d'imagerie à comptage de photons naturel, et

o si la comparaison (2è comparaison) est favorable, le nouveau mode d'imagerie choisi est le mode d'imagerie à comptage de photons naturel,

o sinon le nouveau mode d'imagerie choisi est le mode d'imagerie à comptage de photons forcé.

**3.** Procédé d'imagerie selon l'une des revendications précédentes, **caractérisé en ce que** les paramètres d'acquisition sont des paramètres de cadence d'acquisition et/ou de temps d'intégration et/ou d'ouverture et/ou de variation de bande spectrale et/ou de variation d'atténuation optique.

**4.** Procédé d'imagerie selon l'une des revendications précédentes, **caractérisé en ce que** les paramètres d'acquisition selon le mode d'imagerie classique et les paramètres selon le mode d'imagerie à comptage de photons naturel ont des valeurs fixes, et **en ce que** les paramètres d'acquisition selon le mode d'imagerie à comptage de photons forcé ont des valeurs variant d'une itération à l'autre.

**5.** Procédé d'imagerie selon l'une des revendications précédentes, **caractérisé en ce qu'**il comporte une étape de division spatiale de chaque trame en sous-trames et **en ce que** les étapes des modes d'imagerie sont appliquées à chaque sous-trame.

**6.** Procédé d'imagerie selon l'une des revendications précédentes, **caractérisé en ce que** l'estimation de la qualité de l'image obtenue est déterminée par calcul ou par un opérateur.

**7.** Procédé d'imagerie selon l'une des revendications précédentes, **caractérisé en ce qu'**il comporte une étape préalable d'illumination de la scène au moyen d'un dispositif d'illumination (200) synchronisé avec le dispositif d'acquisition (1) et **en ce que** le dispositif d'illumination et le dispositif d'acquisition présentent la même bande spectrale.

**8.** Procédé d'imagerie selon la revendication précédente, **caractérisé en ce que** le dispositif d'illumination présente des paramètres d'illumination définis à l'étape A.

**9.** Procédé d'imagerie selon la revendication précédente, **caractérisé en ce que** les paramètres d'illumination sont des paramètres de puissance et/ou de durée d'illumination du dispositif d'illumination.

**10.** Système (100) d'imagerie d'une scène qui comprend un dispositif (1) d'acquisition de trames de la scène et une unité de traitement (2) reliée au dispositif d'acquisition, configurés pour mettre en œuvre le procédé d'imagerie selon l'une des revendications 1 à 6.

**11.** Système (100) d'imagerie d'une scène selon la revendication 10, comprenant un dispositif d'illumination (200) de la scène, l'unité de traitement (2) étant reliée au dispositif d'illumination et au dispositif d'acquisition, les dispositifs et l'unité de traitement étant configurés pour mettre en œuvre le procédé d'imagerie selon l'une des revendications 7 à 9.

## Patentansprüche

**1.** Verfahren zum Abbilden einer Szene mittels eines Bildgebungssystems (100), mit dem ein Bild der Szene erhalten werden kann, wobei das Bildgebungssystem ein Gerät (1) zur Erfassung von Frames gemäß Erfassungsparametern umfasst, wobei das Gerät einen Detektor, der Pixel umfasst, und eine Einheit (2) zur Verarbeitung der erfassten Frames umfasst, **dadurch gekennzeichnet, dass** das Verfahren die folgenden Schritte umfasst:

A) Auswählen eines Bildgebungsmodus aus einem herkömmlichen Bildgebungsmodus, einem Bildgebungsmodus mit natürlicher Photonenzählung und einem Bildgebungsmodus mit erzwungener Photonenzählung,

wobei der klassische Bildgebungsmodus geeignet ist, wenn der Photonenfluss pro Pixel und Frame groß ist, und bei dem mindestens ein Frame erfasst wird und dann die Frames summiert werden, um ein Bild zu erhalten,

wobei der Bildgebungsmodus mit natürlicher Photonenzählung geeignet ist, wenn der Photonenfluss pro Pixel und Frame sehr niedrig ist,

wobei der Bildgebungsmodus mit erzwungener Photonenzählung einem Photonenfluss pro Pixel und pro Frame entspricht, der zwischen demjenigen, der dem herkömmlichen Bildgebungsmodus entspricht, und demjenigen, der dem Bildgebungsmodus mit natürlicher Photonenzählung entspricht, liegt

und wobei der Photonenfluss pro Pixel und pro Frame so reduziert wird, dass ein Niveau erreicht wird, das dem Bildgebungsmodus mit natürlicher Photonenzählung entspricht,

und, in Abhängigkeit vom gewählten Bildgebungsmodus,

Bestimmen der entsprechenden Erfassungsparameter durch die Verarbeitungseinheit,

B) Erfassen mindestens eines Frames durch das Erfassungsgerät, das mit den Erfassungsparametern parametrisiert ist, und Übertragen der erfassten Frames zur Verarbeitungseinheit, um ein Bild zu erhalten, wobei das Bild nach den folgenden Teilschritten erhalten wird, wenn der gewählte Bildgebungsmodus der Bildgebungsmodus mit natürlicher Photonenzählung oder der Bildgebungsmodus mit erzwungener Photonenzählung ist:

- Binarisieren der erfassten Frames und
- Summieren der binarisierten Frames, um ein Bild zu erhalten,

C) Schätzen der Qualität des erhaltenen Bildes,
D) D1) Bestimmen, in Abhängigkeit von der Qualität des erhaltenen Bildes, eines oder zweier neuer Bildgebungsmodi, ausgewählt aus dem herkömmlichen Bildgebungsmodus, dem Bildgebungsmodus mit natürlicher Photonenzählung oder dem Bildgebungsmodus mit erzwungener Photonenzählung,
D2) Wiederholen der Schritte A, B, C und D mit dem neuen als Bildgebungsmodus ausgewählten Bildgebungsmodus.

**2.** Verfahren zum Abbilden einer Szene nach dem vorhergehenden Anspruch, **dadurch gekennzeichnet, dass** der neue gewählte Bildgebungsmodus aus Schritt D1) durch Vergleichen (1. Vergleich) der Qualität des erhaltenen Bildes mit einer ersten vorbestimmten Qualität (Qualität1) entsprechend dem herkömmlichen Abbildungsmodus erhalten wird:

- wenn der Vergleich (1. Vergleich) günstig ausfällt, ist der neue gewählte Bildgebungsmodus der herkömmliche Bildgebungsmodus,
- andernfalls Vergleichen (2. Vergleich) der erhaltenen Bildqualität mit einer zweiten vorbestimmten Qualität (Qualität2) entsprechend dem Bildgebungsmodus mit natürlicher Photonenzählung, und

o wenn der Vergleich (2. Vergleich) günstig ausfällt, ist der neue gewählte Bildgebungsmodus der Bildgebungsmodus mit natürlicher Photonenzählung,
o andernfalls ist der neue gewählte Bildgebungsmodus der Bildgebungsmodus mit erzwungener Photonenzählung.

**3.** Bildgebungsverfahren nach einem der vorhergehenden Ansprüche, **dadurch gekennzeichnet, dass** die Erfassungsparameter Erfassungsraten- und/oder Integrationszeit- und/oder Blenden- und/oder Spektralbandvariations- und/oder optische Dämpfungsvariationsparameter sind.

**4.** Bildgebungsverfahren nach einem der vorhergehenden Ansprüche, **dadurch gekennzeichnet, dass** die Erfassungsparameter gemäß dem herkömmlichen Bildgebungsmodus und die Parameter gemäß dem Bildgebungsmodus mit natürlicher Photonenzählung feste Werte haben, und dadurch, dass die Erfassungsparameter gemäß dem Bildgebungsmodus mit erzwungener Photonenzählung Werte haben, die von Iteration zu Iteration variieren.

**5.** Bildgebungsverfahren nach einem der vorhergehenden Ansprüche, **dadurch gekennzeichnet, dass** es einen Schritt des räumlichen Unterteilens jedes Frames in Subframes umfasst, und dadurch, dass die Schritte der Bildgebungsmodi auf jeden Subframe angewendet werden.

**6.** Bildgebungsverfahren nach einem der vorhergehenden Ansprüche, **dadurch gekennzeichnet, dass** die Schätzung der Qualität des erhaltenen Bildes durch Berechnung oder durch einen Operator bestimmt wird.

**7.** Bildgebungsverfahren nach einem der vorhergehenden Ansprüche, **dadurch gekennzeichnet, dass** es einen Vorabschritt des Beleuchtens der Szene mit Hilfe eines Beleuchtungsgeräts (200) umfasst, das mit dem Erfassungsgerät (1) synchronisiert ist, und dadurch, dass das Beleuchtungsgerät und das Erfassungsgerät das gleiche Spektralband aufweisen.

**8.** Bildgebungsverfahren nach dem vorhergehenden Anspruch, **dadurch gekennzeichnet, dass** das Beleuchtungsgerät in Schritt A definierte Beleuchtungsparameter aufweist.

**9.** Bildgebungsverfahren nach dem vorhergehenden Anspruch, **dadurch gekennzeichnet, dass** die Beleuchtungsparameter Leistungs- und/oder Beleuchtungsdauerparameter des Beleuchtungsgeräts sind.

**10.** System (100) zur Abbildung einer Szene, das ein Gerät (1) zur Erfassung von Frames der Szene und eine mit dem Erfassungsgerät verbundene Verarbeitungseinheit (2) umfasst, konfiguriert zum Durchführen des Bildgebungsverfahrens nach einem der Ansprüche 1 bis 6.

**11.** System (100) zur Abbildung einer Szene nach Anspruch 10, das ein Gerät (200) zur Beleuchtung der Szene umfasst, wobei die Verarbeitungseinheit (2) mit dem Beleuchtungsgerät und dem Erfassungsgerät verbunden ist, wobei die Geräte und die Verarbeitungseinheit zum Durchführen des Bildgebungsverfahren nach einem der Ansprüche 7 bis 9 konfiguriert sind.

## Claims

1. A method for imaging a scene using an imaging system (100) making it possible to obtain an image of the scene, the imaging system comprising a device (1) for acquiring frames according to acquisition parameters, said device comprising a detector comprising pixels, and a unit (2) for processing the acquired frames, **characterized in that** the method comprises the following steps:

   A) selection of an imaging mode from among a conventional imaging mode, a natural photon-counting imaging mode and a forced photon-counting imaging mode,

   the conventional imaging mode being suitable when a photon flux per pixel and per frame is large, and in which at least one frame is acquired and then said frames are summed to obtain an image
   the natural photon counting imaging mode being suitable when said photon flux per pixel and per frame is of very low level,
   the forced photon-counting imaging mode corresponding to a photon flux per pixel and per frame intermediate between that corresponding to the conventional imaging mode and that corresponding to the natural photon counting imaging mode
   and in which the photon flux per pixel and per frame is reduced so as to obtain a level corresponding to the natural photon counting imaging mode
   and, depending on the selected imaging mode,
   determination by the processing unit of the corresponding acquisition parameters,

   B) acquisition of at least one frame by the acquisition device parametrized with said acquisition parameters, and transmission of the frames that were acquired to the processing unit in order to obtain an image, the image being obtained at the end of the following sub-steps if the selected imaging mode is the natural photon-counting imaging mode or the forced photon-counting imaging mode:

   - binarization of the frames that were acquired and
   - summing the binarized frames to obtain an image;

   C) estimation of the quality of the image obtained;
   D) D1) depending on the quality of the image obtained, determining one or two new imaging modes selected from among the conventional imaging mode, the natural photon-counting imaging mode or the forced photon-counting imaging mode;
   D2) repeating steps A, B, C and D with the new imaging mode selected as the imaging mode.

2. The method for imaging a scene according to the preceding claim, **characterized in that** the new imaging mode selected in step D1) is obtained by comparing (first comparison) the quality of the image obtained with a first predetermined quality (quality 1) corresponding to the conventional imaging mode:

   - if the comparison (first comparison) is favorable, the new imaging mode selected is the conventional imaging mode;
   - otherwise the quality of the image obtained is compared (second comparison) with a second predetermined quality (quality 2) corresponding to the natural photon-counting imaging mode; and

   o if the comparison (second comparison) is favorable, the new imaging mode selected is the natural photon-counting imaging mode;
   o otherwise the new imaging mode selected is the forced photon-counting imaging mode.

3. The imaging method according to either of the preceding claims, **characterized in that** the acquisition parameters are acquisition rate and/or integration time and/or aperture and/or spectral band variation and/or optical attenuation variation parameters.

4. The imaging method according to one of the preceding claims, **characterized in that** acquisition parameters according to the conventional imaging mode and the parameters according to the natural photon-counting imaging mode have fixed values, and **in that** the acquisition parameters according to the forced photon-counting imaging mode have values that vary from one iteration to another.

5. The imaging method according to one of the preceding claims, **characterized in that** it comprises a step of spatially dividing each frame into sub-frames and **in that** the steps for the imaging modes are applied to each sub-frame.

6. The imaging method according to one of the preceding claims, **characterized in that** the estimate of the quality of the image obtained is determined by computation or by an operator.

7. The imaging method according to one of the preceding claims, **characterized in that** it comprises a prior step of illuminating the scene using an illumination device (200) synchronized with the acquisition device (1) and **in that** the illumination device and the acquisition device have the same spectral band.

8. The imaging method according to the preceding claim, **characterized in that** the illumination device has illumination parameters defined in step A.

9. The imaging method according to the preceding claim, **characterized in that** the illumination parameters are illumination duration and/or power parameters of the illumination device.

10. A system (100) for imaging a scene which comprises a device (1) for acquiring frames of the scene and a processing unit (2) connected to the acquisition device, which are configured to implement the imaging method according to one of claims 1 to 6.

11. A system (100) for imaging a scene according to claim 10, which comprises an illumination device (200) of the scene, the processing unit (2) being connected to the illumination and the acquisition device, the devices and the treatment unit being configured to implement the imaging method according to one of claims 7 to 9.

FIG.1

100

1 11 13 12

Image
obtenue

Unité de
traitement

Trames

Matrice de
détection

Filtre

Dispositif
optique de
formation
d'images

Flux de
scène

2

Paramètres d'acquisition

## FIG.2a

100

1 11 13 12

Image
obtenue

Unité de
traitement

Trames

Matrice de
détection

Filtre

Dispositif
optique de
formation
d'images

Flux de
scène

2

Paramètres d'acquisition

Synchronisation

Paramètres d'illumination

Illumination

Vers la
scène

200

## FIG.2b

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E. LANTZ et al.** Multi-imaging and Bayesian estimation for photon counting with EMCCDs. *Mon. Not. R. Astron. Soc,* 2008, vol. 386, 2262-2270

- **K.B.W. HARPSOE et al.** Bayesian photon counting with EMCCDs. *A&A,* 2012, vol. 537